# EUROPEAN PATENT APPLICATION

(11) **EP 2 308 804 A1**
(43) Date of publication of application: **13.04.2011**
(21) Application number: 09803071.1
(22) Date of filing: 30.07.2009
(51) Int. Cl.: C02F 1/22

(54) **PROCESS FOR PRODUCING HIGH-PURITY WATER FROM LOW-PURITY WATER AND APPARATUS FOR PRODUCING THE HIGH-PURITY WATER**

(30) Priority: 31.07.2008 JP 2008197395
(71) Applicant: CDM Consulting Co., Ltd., Tokyo 104-0054 (JP)
(72) Inventor: HAYAFUJI, Shigeto, Tokyo 140-0014 (JP); HASHIZUME, Hideyuki, Kodaira-shi Tokyo 187-0013 (JP)
(74) Representative: Lamb, Martin John Carstairs
(86) International application number: PCT/JP2009/063898
(87) International publication number: WO 2010/013840

(57) **Abstract**

Based on the findings from the investigation of technical problems in obtaining fresh water from gas hydrates using seawater, the method for producing high-purity water from low-purity water according to the invention solves the above problems. In order to obtain high-purity water from low-purity water, which is not limited to seawater but includes sewage, the method includes the steps of: having one or more types of gases capable of forming gas hydrates and low-purity water come into contact under conditions in which the temperature is higher than the freezing point of the low-purity water and the gas hydrates can be formed, thereby producing solid gas hydrates which are suspended in the low-purity water; removing the low-purity water used in the gas hydrate formation process while substantially maintaining the gas hydrate state, and rinsing off components adhered to the gas hydrates with rinsing water; and by increasing the temperature in the gas hydrate state or decreasing the pressure in the gas hydrate state, decomposing the gas hydrates into a gas and high-purity water. These steps are carried out in the above order.

## Description

### Technical Field

The present invention relates generally to a method and an apparatus for producing high-purity water from low-purity water.

### Background Art

Recently, the world has been short of sweet water. On the other hand, the earth has sufficient water containing numerous impurities, such as seawater and sewage. There has been a strong demand for producing high-purity water such as sweet water from low-purity water and some seawater desalination technologies have been known so far. However, all of them have technical difficulties.

Examples of seawater desalination technologies include: an evaporation process in which seawater is heated using a heat source to generate steam, after which the steam is cooled to obtain fresh water; and a membrane process in which salt in seawater is removed using a membrane.

The evaporation process has problems in that it requires a great amount of heat for water evaporation and that the heated seawater can cause corrosion of equipment.

The membrane process also has a problem in that it is difficult to find materials for semi-transparent membranes excellent in salt tolerance and durability and that are impermeable to salt, and has a further drawback of requiring the application of pressure on seawater of usually up to 6-7 MPa before supplying the seawater to a reverse osmosis membrane module.

Other seawater desalination technologies include, for example, freezing processes, solar energy processes, and gas hydration processes (Japanese Unexamined Patent Application Publication No.HEI11-319805). However, these technologies are still in the developing stages and there have been no reports of any of these technologies being put into practical use for producing drinking water.

Gas hydrates - alternatively called clathrate hydrates - are compounds in which hydrate-forming gas molecules are trapped within a cage-like crystal lattice formed by hydrogen-bonded water molecules, and (gas hydrates) are ice-like solid clathrates formed under constant temperatures and pressures.

The lower the temperature at which gas hydrates are formed, the lower the pressure required. However, because water turns into ice below its freezing point, the speed of hydrate formation in ice is lower than that in water. There is a technology that uses seawater - its freezing point being -4°C - and causes hydrates to be formed at temperatures slightly higher than the freezing point of the seawater. Specifically, in this technology, a gas capable of forming hydrates under the above conditions is selected, hydrates are formed, and because the molecules constituting the cage-like crystals of the hydrates are pure water molecules, fresh water can be obtained from the hydrates.

This technology is, however, not yet in actual use. The idea is excellent but some problems still remain that prevent commercialization.

Meanwhile, some other desalination technologies are described in "Clathrate Hydrate of Natural Gases, Third Edition, 2007" by E. Dendy Sloan Jr. However, none of the technologies is at a commercial stage. This document includes a report of fifteen years of research into seawater desalination, and shows the difficulties in seawater desalination technologies.

### Prior Art Documents

### Patent Document

Patent Document 1: Japanese Unexamined Patent Application Publication No.HEI11-319805)

### Non-patent Document

Non-patent Document 1: Clathrate Hydrate of Natural Gases, Third Edition, 2007, by E. Dendy Sloan Jr.

### Summary of the Invention

### Problem to be solved by the Invention

Accordingly, it is an object of the invention to investigate the problems of technologies for obtaining fresh water from gas hydrates using seawater, find a solution, and obtain, based on findings, high-purity water from low-purity water, the low-purity water being not limited to seawater and also including sewage.

It is also an object of the present invention to provide a method for obtaining water at a level suitable for drinking water.

### Means for Solving the Problem

The invention has been devised based on the following findings. Specifically, as a result of further testing of the seawater desalination technology disclosed in Japanese Unexamined Patent Application Publication No. HEI11-319805, what was obtained was water with salinity only slightly reduced, which could not be used as drinking water, and it has been found that the same outcome would result even when performing seawater desalination in multiple stages.

Note that the term "low-purity water" used in the invention refers to water containing numerous impurities such as seawater and sewage, and the term "high-purity water" refers to water with a purity higher than the low-purity water. High-purity water is not limited to drinking water such as sweet water.

In the above-mentioned prior art, the term "fresh water" is used as opposed to seawater. However, the invention is not limited to seawater desalination. Accordingly, the term "high-purity water" is used instead of fresh water. As far as seawater desalination is concerned, fresh water and high-purity water have the same meaning.

The invention has been devised from years of fundamental research in water obtained from gas hydrates. A gas hydrate can reach a size of about several hundred microns after crystal growth, but some hydrates do not reach that size.

The following types of gas hydrate crystal structures - each composed of cages - are known: structure I is a cubic system measuring 12Å per side; structure II is a cubic system measuring 17.3A per side; and structure H is a hexagonal system with a measuring 12.3A and c measuring 10.2A.

Accordingly, gas hydrates form a group of crystal structures. Assuming that gas hydrates form a sphere with diameter of 50µm and that each crystal structure is a cubic system of 15Å size, at least trillions of the crystal structures exist in the sphere.

Naturally, a gas hydrate crystal structure includes only water and gas molecules, and salt is excluded from the crystal structure. Relatively slow crystal growth expels salt to the outside of the crystal structure while rapid crystal growth may possibly leave salt between microcrystal.

It is extremely difficult to rinse salt from inside hydrates. However, the inventors found in the research that sufficiently-rinsed gas hydrates can produce water of a purity level high enough for drinking water. Rinsing taught in the prior art is far from sufficient. If an appropriate rinsing method is used, it is possible to obtain water of a purity level high enough for drinking water.

Producing high-purity water suitable for drinking water from low-purity water requires rinsing gas hydrates with high-purity water. Here, the amount of high-purity water used for rinsing must be smaller than that of the high-purity water to be obtained. In response to this demand and based on the above findings, the inventors have devised the invention described below.
(1) The first method for producing high-purity water from low-purity water includes the steps of: producing solid gas hydrates which are suspended in the low-purity water by having one or more types of gases capable of forming gas hydrates and low-purity water come into contact under a condition in which the temperature is higher than the freezing point of the low-purity water and the gas hydrates can be formed; rinsing off one or more components adhered to the gas hydrates with rinsing water after removing the low-purity water used in the gas hydrate formation process while substantially maintaining the gas hydrate state; and decomposing the gas hydrates into a gas and high-purity water by increasing the temperature in the gas hydrate state or decreasing the pressure in the gas hydrate state. The above steps are carried out in the above order.
   With the above method for producing high-purity water from low-purity water according to the invention, the amount of resulting high-purity water suitable for drinking water is several times larger than that of high-purity water suitable for drinking water but used for the production. Moreover, waste water generated in the production process can be recycled as, for example, agricultural water, industrial water, or household water.
(2) The second method for producing high-purity water from low-purity water is **characterized in that** the rinsing water used in the step of rinsing off the components adhered to the gas hydrates is low-purity water in the beginning and is changed to water with higher purity gradually or in set order.
   With the above method for producing high-purity water from low-purity water according to the invention, it is possible to produce high-purity water suitable for drinking water while reducing the amount of high-purity water suitable for drinking water but used for the production.
(3) The third method for producing high-purity water from low-purity water is **characterized in that:** the step of rinsing off the components adhered to the gas hydrates with the low-purity water includes the steps of: agitating new low-purity water and the gas hydrates; and removing the low-purity water containing one or more dissolved impurities that had been deposited on the surfaces of the gas hydrates; and the two steps are carried out one or more times.
   With the above method for producing high-purity water from low-purity water according to the invention, it is possible to produce high-purity water suitable for drinking water while reducing the amount of high-purity water suitable for drinking water but used for the production.
(4) The fourth method for producing high-purity water from low-purity water is **characterized in that** rinsing with high-purity water - a final stage of rinsing - in the step of rinsing off the components adhered to the gas hydrates, is carried out by depositing the gas hydrates on a net-like substrate or supplying the gas hydrates to the net-like substrate from the bottom of a rinsing tank, showering the high-purity water on the gas hydrates and, using the phenomenon of the gas hydrates - having a specific gravity smaller than that of the high-purity water - floating due to the buoyancy of water, removing the upper gas hydrates from the site of rinsing.
   With the above method for producing high-purity water from low-purity water according to the invention, if the specific gravity of the gas hydrates is smaller than that of water, it is possible to produce high-purity water suitable for drinking water while reducing the amount of high-purity water suitable for drinking water but used for the production.
(5) The fifth method for producing high-purity water from low-purity water is **characterized in that** rinsing with high-purity water - a final stage of rinsing - in the step of rinsing off the components adhered to the gas hydrates, is carried out by spreading the gas hydrates on a net-like substrate so as to form a thin plate, spraying the high-purity water from above, and draining the high-purity water after use through the net of the net-like substrate.
   With the above method for producing high-purity water from low-purity water according to the invention, it is possible to produce high-purity water suitable for drinking water while reducing the amount of high-purity water suitable for drinking water but used for the production.
(6) The method for producing high-purity water from low-purity water is **characterized in that** the low-purity water is seawater.
   With the above method for producing high-purity water from low-purity water according to the invention, the amount of resulting high-purity water suitable for drinking water is several times larger than that of high-purity water suitable for drinking water but used for the production.
(7) The seventh method for producing high-purity water from low-purity water is **characterized in that** the low-purity water is sewage.
   With the above method for producing high-purity water from low-purity water according to the invention, the amount of resulting high-purity water suitable for drinking water is several times larger than that of high-purity water suitable for drinking water but used for the production.
(8) The first apparatus for producing high-purity water from low-purity water, includes: a supply unit for supplying a raw material for gas hydrates; a gas hydrate formation tank for causing the raw material for gas hydrates to form gas hydrates under a condition for gas hydrate formation; a rinsing tank, which can double as the gas hydrate formation tank or is provided separately from the gas hydrate formation tank, for removing low-purity water used in the gas hydrate formation and rinsing the gas hydrates with rinsing water; and a gas hydrate decomposition tank for obtaining high-purity water by increasing the temperature or decreasing the pressure in the gas hydrate state which has been maintained for the gas hydrates.
   With the above apparatus for producing high-purity water from low-purity water according to the invention, the amount of resulting high-purity water suitable for drinking water is several times larger than that of high-purity water suitable for drinking water but used for the production.
(9) The second apparatus for producing high-purity water from low-purity water is **characterized in that** the rinsing tank further includes a rinsing tank for rinsing the gas hydrates with the low-purity water, and a rinsing apparatus for rinsing the gas hydrates, which have been rinsed with the low-purity water, with high-purity water.
   With the above apparatus for producing high-purity water from low-purity water according to the invention, it is possible to produce high-purity water suitable for drinking water while reducing the amount of high-purity water suitable for drinking water but used for the production.
(10) The third apparatus for producing high-purity water from low-purity water is **characterized in that** the rinsing apparatus for rinsing the gas hydrates with the high-purity water, deposits the gas hydrates on a net-like substrate or supplies the gas hydrates to the net-like substrate from the bottom of the rinsing apparatus, showers the high-purity water on the gas hydrates and transports the gas hydrates - having a specific gravity smaller than that of the high-purity water - independently or with the high-purity water from an outlet provided in the upper part of a side wall of the rinsing tank to the hydrate decomposition tank .
   With the above apparatus for producing high-purity water from low-purity water according to the invention, it is possible to produce high-purity water suitable for drinking water while reducing the amount of high-purity water suitable for drinking water but used for the production.
(11) The fourth apparatus for producing high-purity water from low-purity water is **characterized in that** the rinsing apparatus for rinsing the gas hydrates with the high-purity water, spreads the gas hydrates on a net-like substrate so as to form a thin plate, sprays the high-purity water from above the gas hydrates, and drains the high-purity water after use through the net of the net-like substrate.
   With the above apparatus for producing high-purity water from low-purity water according to the invention, it is possible to produce high-purity water suitable for drinking water while reducing the amount of high-purity water suitable for drinking water but used for the production.
(12) The fifth apparatus for producing high-purity water from low-purity water, is **characterized in that** the net-like substrate is of a belt conveyor type.
   With the above apparatus for producing high-purity water from low-purity water, it is possible to produce high-purity water continuously.
(13) The sixth apparatus for producing high-purity water from low-purity water is **characterized in that** the rinsing tank includes: an agitation wing and an agitation axis in the lower part of the rinsing tank; a funnel in the upper central part; and a communicating tube extending from the bottom of the funnel through the side wall of the rinsing tank to a section for the subsequent process; and the gas hydrates rinsed in agitation travel from the upper end of the funnel, through the funnel and the communicating tube, to the section for the subsequent process.
   With the above apparatus for producing high-purity water from low-purity water, it is possible to smoothly transport the formed gas hydrates under conditions in which the gas hydrate formation condition is practically maintained.
(14) The seventh apparatus for producing high-purity water from seawater, includes: a double tube of a length reaching the deep sea, wherein one or more gas hydrates are formed in its tip, the double tube including: an internal tube which a raw material gas for gas hydrates is supplied to; and an external tube which the gas hydrates formed pass through, the double tube also having: in a vicinity of the tip of the internal tube a pore allowing the gas to enter the space between the internal tube and the external tube; and a porous film permeable to seawater at the tip of the external tube; a rinsing tank for removing the seawater used in the gas hydrate formation and rinsing the gas hydrates with rinsing water; and a gas hydrate decomposition tank for obtaining high-purity water by increasing the temperature or decreasing the pressure in the gas hydrate state which has been kept for the gas hydrates.
   With the above apparatus for producing high-purity water from low-purity water according to the invention, it is possible to form gas hydrates at sea.
(15) The eighth apparatus for producing high-purity water from seawater, is **characterized in that** the rinsing tank further includes a rinsing tank for rinsing the gas hydrates with low-purity water, and a rinsing apparatus for rinsing the gas hydrates, which have been rinsed with the low-purity water, with high-purity water.
   With the above apparatus for producing high-purity water from low-purity water according to the invention, it is possible to form gas hydrates at sea and produce high-purity water suitable for drinking water while reducing the amount of high-purity water suitable for drinking water but used for the production.

### Effects of the Invention

According to the invention, it is possible to produce high-purity water suitable for drinking water - water containing impurities of not more than 100ppm when expressed numerically - from low-purity water such as seawater and sewage. Incidentally, average tap water contains impurities of 40-200ppm and famous natural water, spring water and ideal drinking water contain impurities of not more than 39ppm. Waste water generated during the production process can be used as, for example, agricultural water, industrial water, or household water. Moreover, as long as the process is carried out properly, the amount of resulting high-purity water suitable for drinking water is several times larger than the amount of rinsing water used.

### Brief Description of the Drawings

Fig. 1 is a semi-diagrammatical longitudinal section of an embodiment of the invention.
Fig. 2 is a semi-diagrammatical longitudinal section of another embodiment of the invention.
Fig. 3 is a semi-diagrammatical longitudinal section of still another embodiment of the invention.

### Mode for Carrying out the Invention

The production method according to the invention will be explained below. In the production method, gas hydrates are obtained using a well-known method.

Gas hydrates can be obtained by having one or more types of gases capable of forming gas hydrates and low-purity water come into contact under conditions in which the temperature is higher than the freezing point of the low-purity water and gas hydrates can be formed.

It is common knowledge that a gas hydrate of structure I or structure II is formed, in a gas hydrate-forming phase (hydrate phase), at the temperature and pressure between the temperature and pressure at the quadruple point (Q₁) of hydrate phase, ice phase, water phase and gas phase and the temperature and pressure at the quadruple point (Q₂) of hydrate phase, water phase, liquefied gas phase and gas phase.

A gas hydrate of structure H is formed, in a gas hydrate-forming phase (hydrate phase), at the temperature and pressure between the temperature and pressure at the quintuple point (Q₁) of hydrate phase, ice phase, water phase, gas phase and liquid hydrocarbon phase and the temperature and pressure at the quintuple point (Q₂) of H-hydrate phase, ice phase, water phase, gas phase, liquid hydrocarbon phase. Among the structure types, structure II is preferably used because it deposits more salt compared to structure I and structure H.

Therefore, the choice of which gas to use limits the temperatures and pressures at which gas hydrates are formed. Specifically, gas hydrates are formed at a supercooling temperature lower than the equilibrium temperature at the hydrate phase between the quadruple points (Q₁ and Q₂) or at the hydrate phase between the quintuple points (Q₁ and Q₂). In the invention, the gas hydrate formation condition is a supercooled state. A supercooled state is necessary also because gas hydrate formation is an exothermal reaction.

Some types of gases are known as forming stable gas hydrates at normal pressures and at specified temperatures (e.g., Non-Patent Document, Table 2.5).

Usually, in the presence of water, the lower the temperature, the lower the pressure required to form gas hydrates. However, because the reaction speed decreases under conditions in which water turns into a solid, temperatures below the freezing point of water are not practical for use. In this respect, because seawater is salt water and accordingly has a low freezing point, it offers a wider scope of selection of gas hydrate formation conditions than that for water containing no salt.

From this aspect, if seawater is used as a raw material for water, a gas capable of forming gas hydrates under conditions of low pressures and temperatures higher than the seawater freezing point is desirable. Specifically, a gas forming gas hydrates at not more than 5MPa, preferably not more than 3MPa, more preferably not more than 2MPa, is used in terms of equipment costs.

From this point of view, for example, butane, isobutane, propane, cyclopropane, tetrahydrofuran, propylene, chlorine, CH₃CHF₂, or CH₃CCIF₂ is desirable in terms of being capable of forming gas hydrates at extremely low pressures. Note that it is unnecessary to consider the cost of a gas because it can be recycled.

The following can be said in terms of properties of the resulting gas hydrates. First, gas hydrates of large grain size are favorable in terms of separation from seawater and easy transportation. For example, methane hydrates are desirable, having average grain size of 50-150µm.

Also, it is naturally desirable that the proportion of water (host molecules) in a gas hydrate is larger than that of gas (guest molecules).

For a certain type of gas hydrates, for example, methane hydrates or carbon dioxide hydrates, anomalous self-preservation is observed for a certain period of time under conditions outside the hydrate stability zone.

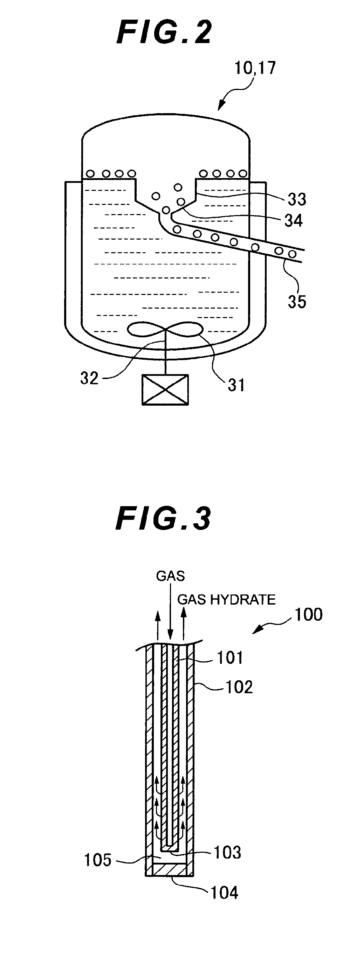

Methane is easy to handle because 50% of it can remain in a gas hydrate state at 280°K for about 10 minutes even outside the anomalous preservation regime of its gas hydrates (see Non-patent Document 1, Fig. 3, 36) and, therefore, can be processed at normal pressures. In this respect, a gas exhibiting an anomalous preservation phenomenon, for example, methane or carbon dioxide, is effective.

Gas hydrates form crystals in which a gas is crystal nuclei. In the invention, it is desirable to enhance the crystal growth because the larger the size of a gas hydrate, the better the rinsing efficiency. A gas-liquid agitation method, which will be described later, is more desirable than a water spray method, which will also be described later, in terms of enhancing the crystal growth. Note that the number of types of gases capable of forming gas hydrates may be one or two or more and the gases may include a gas incapable of forming gas hydrates.

Low-purity water, for example, seawater, that has been used in the gas hydrate formation process contains a substantial amount of highly-concentrated impurities that are deposited on the external walls of the gas hydrates. Therefore, after the gas hydrates are formed, the low-purity water used in the gas hydrate formation is removed. The removal is carried out while substantially maintaining the gas hydrate state.

Then, the production method of the invention proceeds to rinsing off components adhered to the gas hydrates while substantially maintaining the gas hydrate state.

For the rinsing water, it is desirable to use low-purity water at first, and then change to higher-purity water gradually or in set order. Where the low-purity water for use as rinsing water is seawater, one example would be to first use seawater (average salt concentration of about 3.5%) as rinsing water, then salt water of about 2000ppm salt concentration, and finally salt water of about 50ppm salt concentration. In this case, it is desirable to first use low-purity water to remove salt adhered to the external walls of gas hydrates as much as possible.

In principle, if rinsing water is low-purity water (seawater), it is possible to reduce the concentration of salt adhered to the external walls of the gas hydrates to the level of the salt concentration of seawater. Reducing the salt concentration to that level requires, for example, agitating the gas hydrates and the low-purity water so that both flow, or making the gas hydrates be in a fixed state and the low-purity water in a flowing state like sprayed water or shower water, thereby removing the components adhered to the external walls of the gas hydrates.

Agitation without changing a solution has no efficiency because the concentration of the solution increases. Accordingly, desirable rinsing is a repetition of the steps of draining a used solution from an agitation tank after agitation and supplying new low-purity water to the tank for further agitation. This rinsing process results in gas hydrates having an impurity concentration slightly higher than that of the low-purity water.

Rinsing is carried out in order to remove the components adhered to gas hydrates as much as possible while retaining the gas hydrate structures as much as possible. In order to retain the gas hydrate structures, the average temperature and pressure conditions in the rinsing process should be kept in a range substantially maintaining the gas hydrate state. Meanwhile, in order to increase the water solubility of components adhered to the gas hydrates, the rinsing water for removing the components is preferably at a high temperature. Accordingly, the temperature of the rinsing water is determined taking the above two purposes into consideration. Conditions in which the gas hydrate state is substantially maintained include the anomalous self-preservation regime of methane or carbon dioxide. In the invention, the state in which "the gas hydrate state is substantially maintained" includes not only the state where some hydrates are broken due to the heat of the rinsing water in the process of mixing the rinsing water and the gas hydrates, but also the state where up to about 50% of the gas hydrates are broken. In this sense, a gas exhibiting the above-described anomalous self-preservation phenomena is convenient to use because it allows rinsing the gas hydrates under conditions in which the anomalous self-preservation regime occurs, from the beginning or in the middle of the rinsing process, depending on the time required for the process.

From this point of view, desirable guest molecules are ones having high Q₂ or, when Q₂ does not exist or is not known, ones capable of forming gas hydrates at low pressures and temperatures not lower than 0°C.

In the former case, guest molecules capable of forming gas hydrates at temperatures preferably not lower than 2°C, more preferably not lower than 3°C, and most preferably not lower than 5°C are used. In the latter case, guest molecules capable of forming gas hydrates at pressures preferably not higher than 5MPa, more preferably not higher than 3MPa, and most preferably not higher than 1 MPa are used.

Examples of desirable gases include: chlorine (T at Q₂ = 28.3°C, P at Q₂ = 0.84MPa), carbon dioxide (T at Q₂ = 9.9°C, P at Q₂ = 4.44MPa), ethylene oxide, tetrahydrofuran, cyclopropane (T at Q₂ = 16.21°C, P at Q₂ = 0.559MPa), CH₃CHF₂ (T at Q₂ = 14.90°C, P at Q₂ = 0.430MPa), CH₃CCIF₂ (T at Q₂ = 13.09°C, P at Q₂ = 0.229MPa), C₃H₈ (T at Q₂ = 5.8°C, P at Q₂ = 0.556MPa), H₂S (T at Q₂=29.7°C, P at Q₂ = 2.239MPa), and C₂H₄ (T at Q₂ = 14.8°C, P at Q₂ = 3.39MPa). Of these gases, chlorine, cyclopropane, CH₃CHF₂, CH₃CCIF₂, or C₃H₈ each capable of forming gas hydrates at low pressures, or methane or carbon dioxide exhibiting the above-described anomalous self-preservation phenomena is desirable.

Then, the components adhered to the gas hydrates are preferably rinsed off with high-purity water while substantially maintaining the above-described gas hydrate formation conditions. For the high-purity water for use as rinsing water, it is desirable to change water while increasing the purity gradually or in set order, but it is undesirable to use water with impurity concentration of less than 100ppm from the beginning.

In this way, water that has been used in rinsing can be recycled and it is possible to produce a large amount of high-purity water suitable for drinking water using a small amount of high-purity water.

Rinsing with water other than low-purity water needs to be carried out with a rinsing method that uses an amount of water less than that used in agitation. One example is a method to deposit the gas hydrates on a net-like substrate or supply the gas hydrates to the net-like substrate from the bottom of a rinsing tank, and shower the high-purity water on the gas hydrates, thereby utilizing the phenomenon of the gas hydrates having a specific gravity smaller than that of high-purity water and accordingly floating due to the buoyancy of water, removing the upper gas hydrates from the site of rinsing. In this case, it is desirable to make the high-purity water into small droplets, i.e., spray the high-purity water and put the gas hydrates homogeneously under the sprayed high-purity water. Another method is to spread the gas hydrates on a net-like substrate so as to form a thin plate, spray the high-purity water from above, and drain the high-purity water after use through the net of the net-like substrate. In the case of supplying the gas hydrates to the net-like substrate from the bottom of the rinsing tank, it is desirable to supply the gas hydrates together with water that has been used for rinsing and use the buoyancy of that water.

Then, by increasing the temperature in the gas hydrate state or decreasing the pressure in the gas hydrate state, each gas hydrate is made into a gas and high-purity water. The gas may be recycled or discharged into air if it will not cause harm to the environment.

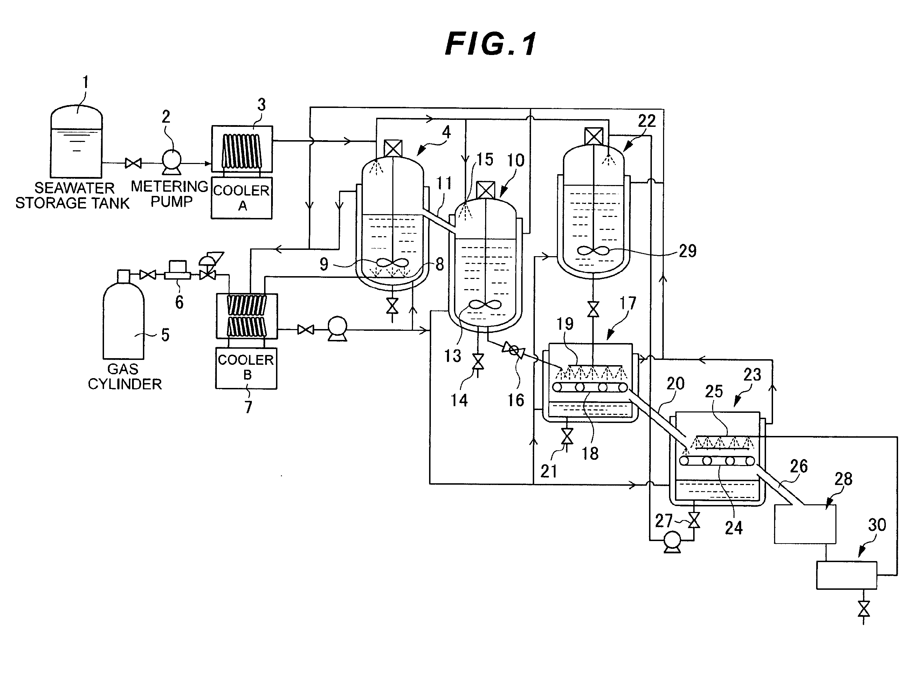

A desirable embodiment of the production apparatus according to the invention will be explained below with reference to the attached drawings. Fig. 1 is a semi-diagrammatical longitudinal section of an embodiment of the invention. The below explanation is about an example where seawater is used as low-purity water.

Seawater - a raw material for gas hydrates - is supplied from seawater or a seawater storage tank 1 via a metering pump 2, a cooler 3 for cooling the seawater as necessary, and to a gas hydrate formation tank 4. For example, if cyclopropane is used as a raw material for gas hydrates, stable gas hydrates can be obtained at 2.8°C and normal pressure (see Non-patent Document 1, Table 2.5), therefore, the cooler 3 is unnecessary depending on the site and season for the production. If chlorine is used as a raw material for gas hydrates, stable gas hydrates can be obtained at 9.7°C and normal pressure (see Non-patent Document 1, Table 2.5), so the cooler 3 is again unnecessary depending on the site and season for the production. Moreover, chlorine has an effect of sterilizing the resulting water.

A gas - another raw material for gas hydrates - is supplied from a gas cylinder 5, via a compressor 6 as necessary, to a cooler 7 for cooling the gas as necessary, and to the gas hydrate formation tank 4, then discharged from a gas exhaust tube 8 provided in the lower part of the gas hydrate formation tank.

The gas and the seawater in the gas hydrate formation tank 4 are put under the temperature and pressure conditions for enabling gas hydrate formation, and agitated by an agitation unit 9, forming gas hydrates.

Then, gas hydrates start to form. Because the gas hydrates have different specific gravity from seawater, they can be separated from each other due to that difference. For example, the specific gravity of methane gas hydrates is 0.94, which is lower than the specific gravity of seawater, therefore, the methane gas hydrates float on top of the seawater in the gas hydrate formation tank 4. On the other hand, dimethylpentane hydrates have a specific gravity of 1.291 (calculated value), which is higher than the specific gravity of seawater, therefore, the dimethylpentane hydrates sink. Appropriate measures must be taken in order to deal with those differences.

If the gas hydrates formed above have a specific gravity lower than that of seawater, the gas hydrates are transported, together with seawater, from the gas hydrate formation tank 4, via a communicating tube, 11 to a rinsing tank 10 to be subjected to the subsequent process of rinsing off the salt adhered to the gas hydrates with low-purity water (seawater).

On the other hand, if the gas hydrates have a specific gravity higher than that of seawater, the gas hydrates are separated from the seawater by centrifugation, mixed with a solution for use in the next process, and transported to a tank to be subjected to the subsequent process. This method can also be employed in the case where the gas hydrates have a specific gravity lower than that of seawater.

The rinsing tank 10 for rinsing the formed gas hydrates with low-purity water includes, in addition to an agitation unit 13, an outlet 14 for the low-purity water and an inlet 15 for new low-purity water.

If the gas and the seawater have been agitated during the gas hydrate formation process in the gas hydrate formation tank 4, salt deposited on the surfaces of the gas hydrates is dissolved to some extent in the seawater. Therefore, the seawater in the gas hydrate formation process has a considerably high salt concentration and does not allow further salt dissolution. Accordingly, if the gas hydrates in the rinsing tank 10 are accompanied by the seawater used in the gas hydrate formation process, only the seawater is drained from the outlet 14 under conditions in which the gas hydrate state is substantially maintained.

The following steps are repeated: closing the outlet 14, supplying new low-purity water (seawater) to the rinsing tank 10 via the inlet 15, agitating the low-purity water (seawater) and the gas hydrates so that the salt deposited on the surfaces of the gas hydrates is dissolved in the low-purity water (seawater) as much as possible, draining the low-purity water now having increased salt concentration due to the agitation from the outlet 14, and supplying more new low-purity water for further agitation. Instead of agitation, the gas hydrates may be rinsed with shower water. Naturally, these steps are carried out under conditions in which the gas hydrate state is substantially maintained.

When an increase in the salt concentration can no longer be observed in agitation, both the gas hydrates and the seawater are transported via a ball valve 16 to a rinsing apparatus 17 to be subjected to the subsequent process, i.e., rinsing with mid-purity water.

The rinsing apparatus 17 for rinsing with mid-purity water is composed of: a net-like substrate 18 that rotates as a belt conveyor; a mid-purity water spray apparatus 19; a communicating tube 20; and an outlet 21. The term "mid-purity water" is used to refer to water with a purity higher than that of the low-purity water but lower than that of the high-purity water which will be described later.

Usually, waste water obtained from high-purity water rinsing, which will be described later, is directly used as mid-purity water. If necessary, some parts of high-purity water obtained according to the invention or low-purity water may be added to the waste water in a mixing tank 22 to produce a mixture.

After being transported, together with rinsing solution, via the ball valve 16 to the rinsing apparatus 17 for mid-purity water rinsing, the gas hydrates are spread on the net-like substrate 18 that is rotating as a belt conveyor. If necessary, the net-like substrate 18 is vibrated so that a homogeneously thin sheet of gas hydrates can be formed on the net-like substrate 18.

The gas hydrates are then rinsed with the mid-purity water sprayed from above by the mid-purity water spray apparatus 19, and then transported from the end of the belt conveyor, via the communicating tube 20, to a rinsing apparatus 23 for rinsing with high-purity water. Meanwhile, the solution used for the rinsing is drained from the outlet 21. The above-described steps of rinsing with mid-purity water in the rinsing apparatus 17 are also carried out under the conditions in which the gas hydrate state is substantially maintained.

Like the rinsing apparatus 17, the rinsing apparatus 23 for rinsing with high-purity water is composed of: a net-like substrate 24 that rotates as a belt conveyor; a high-purity water spray apparatus 25; a communicating tube 26; and an outlet 27. The term "high-purity water" refers to water with almost the same level of purity as the high-purity water produced in the invention.

The gas hydrates transported via the communicating tube 20 to the rinsing apparatus 23 for high-purity water rinsing, fall on the net-like substrate 24 that is rotating as a belt conveyor. If necessary, the net-like substrate 24 is vibrated so that a homogeneously thin sheet of gas hydrates can be formed on the net-like substrate 24. The gas hydrates are then rinsed with high-purity water sprayed from above by the high-purity water spray apparatus 25, and then transported from the end of the belt conveyor, via the communicating tube 26, to a gas hydrate decomposition tank 28.

Meanwhile, the solution used for the rinsing is drained through the net of the net-like substrate 24, accumulates in the bottom of the high-purity water rinsing apparatus 23, and pumped up from the outlet 27 to the mixing tank 22 in which an agitation apparatus 29 homogenizes the salt concentration of the rinsing solution so as to use it as a raw material for a rinsing solution for use in the rinsing apparatus 17 for mid-purity water rinsing.

In the gas hydrate decomposition tank 28, the conditions for the existence of the gas hydrates are not maintained, so the gas hydrates decompose.

Specifically, the gas hydrates are put under temperature and pressure conditions that allow decomposition of the gas hydrates into a gas and water. The resulting water is then transported to a fresh water tank 28 and the gas may be discharged if it does not harm the environment, or recycled (not shown in the drawing). In the case of recycling of the gas, the gas cylinder 5 is unnecessary and the gas returns from the gas outlet, via the compressor 6, to the cooler 7.

If the specific gravity of gas hydrates is less than 1, rinsing tanks may be of the structure shown in Fig. 2. The rinsing tank 10 may have agitation wings 31 and an agitation axis 32 in the lower part of the rinsing tanks, a funnel 33 in the upper central part, and a communicating tube 35 extending from the bottom 34 of the funnel, through the rinsing tank side wall, to a section for a subsequent process. With this structure, the gas hydrates rinsed in agitation are supplied from the upper end of the funnel, through the funnel itself and the communicating tube, to a section for a subsequent process. The above explanation is for the case where the gas hydrate formation tank 4 and the rinsing tank 10 where the salt adhered to the gas hydrates is rinsed off with low-purity water are separately provided, however, the rinsing tank 10 can also double as the gas hydrate formation tank 4.

The above explanation is for an example in which gas hydrates are formed on land. However, gas hydrates may be formed at sea. An apparatus for gas hydrate formation at sea will be explained below with reference to Fig. 3. Fig. 3 is a semi-diagrammatical longitudinal section showing a tip of a gas hydrate formation tube 100 located in the deep sea. The term "deep sea" refers to a place in the sea where the seawater temperature is not higher than 10°C. Naturally, the depth at which the gas hydrate formation tube is positioned varies depending on latitude.

The lower the seawater temperature is, the smaller the number of degrees of temperature to decrease in order to reach the temperature required for the gas hydrate formation conditions. However, the pressure required for the gas increases with the depth of the water. Accordingly, an appropriate depth is selected taking the advantages and disadvantages of the above components into consideration. The gas hydrate formation tube 100 located in the deep sea is of a double tube structure composed of an internal tube 101 and an external tube 102. Of these tubes, the external tube 102 is of a length reaching the deep sea and has a porous film 104 permeable to seawater at its tip.

A raw-material gas for gas hydrate formation is supplied from a pressurized gas storage tank (not shown in the drawing) to the internal tube 101 and then to the tip of the gas hydrate formation tube 100.

The internal tube 101 has, in the vicinity of its tip, a plurality of pores 103 which a gas passes through from the internal tube 101 to the external tube 102. The seawater passes through the porous film 104 and enters the space 105 between the external tube 102 and the internal tube 101 with a high pressure.

Meanwhile, the gas in the internal tube 101 also enters the space 105 through the pores 103. If the pressure and temperature in the space 105 satisfy the gas hydrate formation conditions, gas hydrates are formed. That is, the space 105 is the site of gas hydrate formation. In this respect, it is desirable that the temperature of the seawater is relatively low.

Due to the pressure of the seawater entering the space 105 through the porous film 104 and the gas entering the space 105 through the pores 103 of the internal tube 101, the formed gas hydrates go through the space 105 and float to the top. The gas hydrates are then supplied, together with the seawater, to the rinsing tank 10 for rinsing with low-purity water. Subsequent steps are the same as those explained above, so their explanations will be omitted.

Although all the explanations above are for the case where seawater is used, the invention can also be utilized in the same manner with sewage. Sewage may contain salt as well as other components and these are adhered to the external walls of the gas hydrates, so it is necessary to use appropriate means to remove them as much as possible. As for the water-soluble components, the same method used for seawater may be employed.

In general, after removing components that can be removed by filters, phase-separable parts in the sewage in the tank 1 are separated into an aqueous phase containing water-soluble components and an oil phase containing oily components by a method such as still standing or centrifugation. The aqueous phase is handled with a method similar to the method used for seawater. On the other hand, the oil phase containing water-insoluble components such as organics, if they can be used as fuels or their specific constituents can be used for purposes other than fuels, is handled with a method for, for example, removing components other than the specific constituents by using, for example, an absorbent.

### Industrial Applicability

The invention enables producing, from low-purity water such as seawater or sewage, high-purity water suitable for drinking water. Waste water generated during the production process can be recycled as, for example, agricultural water, industrial water, or household water. Moreover, a gas used in the production can also be recycled, exerting no burden on the environment.

### Description of Reference Numerals

- 1: seawater storage tank
- 2: metering pump
- 3: cooler
- 4: gas hydrate formation tank
- 5: gas cylinder
- 6: compressor
- 7: cooler
- 8: gas exhaust tube
- 9: agitation means
- 10: rinsing tank for rinsing with low-purity water
- 11: communicating tube
- 13: agitation unit
- 14: outlet for low-purity water after being agitated
- 15: Inlet for new low-purity water
- 16: ball valve
- 17: rinsing apparatus for rinsing with mid-purity water
- 18: net-like substrate rotating as a belt conveyor
- 19: mid-purity water spray apparatus
- 20: communicating tube
- 21: outlet
- 22: mixing tank
- 23: rinsing apparatus for rinsing with high-purity water
- 24: net-like substrate rotating as a belt conveyor
- 25: high-purity water spray apparatus
- 26: communicating tube
- 27: outlet
- 28: gas hydrate decomposition tank
- 29: agitation apparatus
- 30: fresh water tank
- 31: agitation wings
- 32: agitation axis
- 101: internal tube
- 102: external tube
- 103: pores
- 104: porous film
- 105: space (gas hydrate formation site)

## Claims

1. A method for producing high-purity water from low-purity water, comprising the steps of:
producing solid gas hydrates which are suspended in the low-purity water by having one or more types of gases capable of forming gas hydrates and low-purity water come into contact under a condition in which the temperature is higher than the freezing point of the low-purity water and the gas hydrates can be formed;
rinsing off one or more components adhered to the gas hydrates with rinsing water after removing the low-purity water used in the gas hydrate formation process while substantially maintaining the gas hydrate state; and
decomposing the gas hydrates into a gas and high-purity water by increasing the temperature in the gas hydrate state or decreasing the pressure in the gas hydrate state,
wherein these steps are carried out in the above order.

2. The method for producing high-purity water from low-purity water according to claim 1, wherein the rinsing water used in the step of rinsing off the components adhered to the gas hydrates is low-purity water in the beginning and is changed to water with higher purity gradually or in set order.

3. The method for producing high-purity water from low-purity water according to claim 2, wherein:
the step of rinsing off the components adhered to the gas hydrates with the low-purity water includes the steps of: agitating new low-purity water and the gas hydrates; and removing the low-purity water containing one or more dissolved impurities that had been deposited on the surfaces of the gas hydrates; and
the two steps are carried out one or more times.

4. The method for producing high-purity water from low-purity water according to claim 2 or 3, wherein rinsing with high-purity water - a final stage of rinsing - in the step of rinsing off the components adhered to the gas hydrates, includes: depositing the gas hydrates on a net-like substrate or supplying the gas hydrates to the net-like substrate from the bottom of a rinsing tank; showering high-purity water on the gas hydrates; and, using the phenomenon of the gas hydrates - having a specific gravity smaller than that of the high-purity water - floating due to the buoyancy of water, removing the upper gas hydrates from the site of rinsing.

5. The method for producing high-purity water from low-purity water according to claim 2 or 3, wherein rinsing with high-purity water - a final stage of rinsing - in the step of rinsing off the components adhered to the gas hydrates, includes: spreading the gas hydrates on a net-like substrate so as to form a thin plate; spraying the high-purity water from above; and draining the high-purity water after use through the net of the net-like substrate.

6. The method for producing high-purity water from low-purity water according to any one of claims 1-5, wherein the low-purity water is seawater.

7. The method for producing high-purity water from low-purity water according to any one of claims 1-5, wherein the low-purity water is sewage.

8. An apparatus for producing high-purity water from low-purity water, comprising:
a supply unit for supplying a raw material for one or more gas hydrates;
a gas hydrate formation tank for causing the raw material for gas hydrates to form gas hydrates under a condition for gas hydrate formation;
a rinsing tank, which can double as the gas hydrate formation tank or is provided separately from the gas hydrate formation tank, for removing low-purity water used in the gas hydrate formation and rinsing the gas hydrates with rinsing water; and
a gas hydrate decomposition tank for obtaining high-purity water by increasing the temperature or decreasing the pressure in the gas hydrate state which has been maintained for the gas hydrates.

9. The apparatus for producing high-purity water from low-purity water according to claim 8, wherein the rinsing tank further includes, a rinsing tank for rinsing the gas hydrates with the low-purity water, and a rinsing apparatus for rinsing the gas hydrates, which have been rinsed with the low-purity water, with high-purity water.

10. The apparatus for producing high-purity water from low-purity water according to claim 9, wherein the rinsing apparatus for rinsing the gas hydrates with the high-purity water deposits the gas hydrates on a net-like substrate or supplies the gas hydrates to the net-like substrate from the bottom of the rinsing apparatus, showers high-purity water on the gas hydrates and transports the gas hydrates - having a specific gravity smaller than that of the high-purity water - independently, or with the high-purity water from an outlet provided in the upper part of a side wall of the rinsing tank to the hydrate decomposition tank .

11. The apparatus for producing high-purity water from low-purity water according to claim 9, wherein the rinsing apparatus for rinsing the gas hydrates with the high-purity water spreads the gas hydrates on a net-like substrate so as to form a thin plate, sprays the high-purity water from above the gas hydrates, and drains the high-purity water after use through the net of the net-like substrate.

12. The apparatus for producing high-purity water from low-purity water according to claim 11, wherein the net-like substrate is of a belt conveyor type.

13. The apparatus for producing high-purity water from low-purity water according to claim 8 or 9, wherein
the rinsing tank includes: an agitation wing and an agitation axis in the lower part of the rinsing tank; a funnel in the upper central part; and a communicating tube extending from the bottom of the funnel through the side wall of the rinsing tank to a section for a subsequent process; and
the gas hydrates rinsed in agitation travel from the upper end of the funnel, through the funnel and the communicating tube, to the section for the subsequent process.

14. An apparatus for producing high-purity water from seawater, comprising:
a double tube of a length reaching the deep sea, wherein one or more gas hydrates are formed in its tip, the double tube including: an internal tube which a raw material gas for one or more gas hydrates is supplied to; and an external tube which the gas hydrates formed pass through, the double tube also having: in a vicinity of the tip of the internal tube a pore allowing the gas to enter the space between the internal tube and the external tube; and a porous film permeable to seawater at the tip of the external tube;
a rinsing tank for removing the seawater used in the gas hydrate formation and rinsing the gas hydrates with rinsing water; and
a gas hydrate decomposition tank for obtaining high-purity water by increasing the temperature or decreasing the pressure in the gas hydrate state which has been kept for the gas hydrates.

15. The apparatus for producing high-purity water from seawater according to claim 14 wherein the rinsing tank further includes a rinsing tank for rinsing the gas hydrates with low-purity water, and a rinsing apparatus for rinsing the gas hydrates, which have been rinsed with the low-purity water, with high-purity water.
